# EUROPEAN PATENT SPECIFICATION

(11) **EP 0 626 566 B1**
(45) Date of publication and mention of the grant of the patent: **21.11.2001**
(21) Application number: 94500092.5
(22) Date of filing: 25.05.1994
(51) Int. Cl.: G01F 1/12, G01F 1/08, G01F 15/02

(54) **Signal correction circuit for a flow meter**
Schaltungsanordnung zur Korrektur der Ausgangssignals einer Durchflussmessers
Circuit pour corriger le signal de sortie d'un débitmètre

(30) Priority: 25.05.1993 ES 9301122; 19.05.1994 ES 9401107
(43) Date of publication of application: 30.11.1994
(73) Proprietor: CONTADORES DE AGUA DE ZARAGOZA, S.A., E-50720 La Cartuja Baja (Zaragoza) (ES)
(72) Inventor: Bellvis Castillo, Juan Luis, Ctra Castellon,, 50720 La Cartuja Baya (Zaragoza) (ES)
(74) Representative: Ungria Lopez, Javier

(56) References cited:
- EP-A- 0 011 787
- EP-A- 0 066 716
- EP-A- 0 100 844
- EP-A- 0 499 860
- WO-A-87/04520
- US-A- 3 965 341
- US-A- 5 016 187

## Description

### OBJECT OF THE INVENTION

As is expressed in the title of the present specification, the present invention consists of a fluid meter, which can be any type of meter that has or may have a magnetic signal, as transmission of movement of the measuring part.

The fluid meter includes an electronic correction circuit, which receives the signal transmitted through a magnetic sensor, compares said signal with the data stored in its memory, processes and corrects the information and provides the value of the real volume consumed.

On the other hand, the fluid meter can carry out a series of functions that represent an important advance, so that the meter does not inform only about external incidences of the same (detection of leakage, control only for hot water, etc.), but also about internal incidences of the same (indication of the state of the batteries, indication of internal faults, etc.)

In short, obtainment of a very precise measurement of the water consumed, as well as information about the existence of leaks so that appropriate action may be taken in order to prevent the same is obtained among other things.

Besides, it can measure just the hot water consumed, for which the control will be made as of a specific temperature.

This represents some big advantages not only for the user but for society in general, since if a large number of leaks that are produced can be detected and eliminated, a large saving of water is achieved, which is not used but rather wasted, water being such a scarce commodity.

### BACKGROUND OF THE INVENTION

In order to center the description of the object of this invention, for the purpose of providing a better understanding and as a example, as of now we will refer to water meters, including home water meters, as well as industrial ones, without this implying any restriction to the use of said improvements to any type of meter capable of measuring the consumption of any fluid and that can include the proposed improvement, thus increasing its advantages in terms of precision and/or increasing the measuring range of the meter.

The supply of drinking water to consumers and to industry is becoming a problem, on the one hand due to the volumes needed, which are larger and larger, and on the other hand, due to the scarcity thereof. Consequently, the costs for obtaining, transporting and treating water are higher and higher for society and a correct control of consumption is a very important requirement.

Technology has echoed this need and the apparatus used to measure consumption, meters, have undergone noteworthy improvements over the last decades in terms of precision and reliability.

Unfortunately, the physical principle on which the operation of meters is based and the construction requirements of the same, imply some inevitable conditioning factors that make it very difficult to improve the existing prior art of these apparatus. In effect, the operation of a conventional meter is based on having the fluid whose flow must be measured impinge on a measuring part, preferably turnable, which comes into movement under the action of the former, and whose movement is assumed to be proportional to the speed of flow. In other words, each rotation of the measauring part is assigned a set volume for all of the flows of the range of measurement. But this proportionality does not exist throughout the entire range of measurement of a meter, given that the impact that causes the flow upon the movable part of the meter, whatever the type of system used is, causes significant local alterations of the flow that are not proportional to the speed, but rather to the second and even third potential of the former, which causes error in the measurement.

On the other hand, all movable systems require certain play with regard to the chamber that houses it, given that it is essential to avoid possible friction that would reduce the sensitivity of the measuring part. This inevitably causes volumetric losses, in other words, a small part of the flow "will escape" through said play. As the flow that flows approaches the value of the volumetric leak of the meter, which will happen in the low flows of the range of measurement, the movement of the measuring part "delays" with regard to the flow and becomes irregular, giving an incorrect measurement always due to defect.

The combination of these two factors is reflected in the imprecision of conventional meters, especially in the low area of the range of measurement, in such a way that the official bodies responsible for the homologation of these apparatus, must include in the corresponding regulations an increase of the errors of measurement in the low area of the range of measurement up to 2.5 times with regard to the rest and an uncontrolled area from zero flow, until the precision of the meter enters the range of accepted errors.

This can be represented graphically, taking the following factors into account:
* Q = O: zero flow, no fluid flows
* Qmin: minimum flow, the bottom limit of measurement being where the precision of the meter enters the maximum increased range of error, accepted by regulations for the bottom range of measurement (± 5 %)
* Qt: transition flow; the flow being within which the precision of the meter must have passed from the increased range of error to the normal one for the rest of the range of measurement, in other words, up to the maxumum flow (Qmax), whose maximum accepted error is ± 2%.

The uncontrolled area remains comprised between zero flow and the minimum flow, and it is the former in which the precision of the meter remains outside the limits of the enlarged maximum range of error, wherein the meter does not measure or does so in an incontrolled manner.

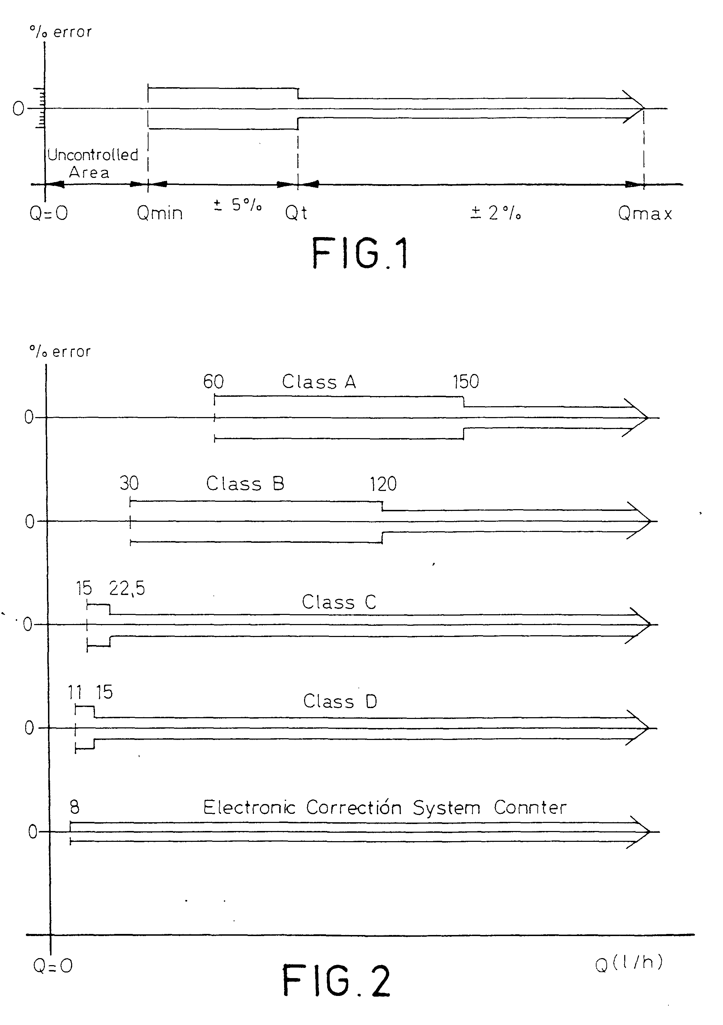

The regulations consider four types of metrological classes for water meters: A, B, C and D, whose requirements regarding precision of the apparatus for flows lower than 15 m³/hour, are represented in figure 2 wherein the limits of minimum flow and transition flow, corresponding to a meter of 3 m³/hour has been taken, given that this type of apparatus represents a very high percentage of all meters installed.

In figure 2 one observes the greater requirements of precision in accordance with the advance in the metrological class, given that they drop significantly in the uncontrolled area as well as in the accepted increased range of maximum error.

Centering on the most demanding metrological class, D, it is seen that there is an uncontrolled area which goes from zero flow up to the flow of 11 l/h, and the accepted increased range of maximum error, up to 15 l/h.

This situation leads to the fact that small consumed volumes, which may be the leaks that are produced in different points of use, are not measured or are measured incorrectly, which explains one of the serious problems of Utility Companies: the enormous phase shift existing between the measured consumption and the supplied real volume.

This happens because in homes as well as in shops as well as in industry, small leaks that exist in countless points of use are not considered to be important, but it is obvious that the sum of all of them implies waste of a scarce commodity, which is greater the smaller the hydric resources of a country are.

As it has already been indicated, conventional meters have a series of conditioning factors, as a result of the physical principle on which their operation is based and as a first consequence thereof, the gage or indicator with the corresponding indications, can only be perpendicular to the gear transmission shaft.

Hence, the operation of a conventional meter is based on making the fluid whose flow must be measured impinge on a measuring part, preferably turnable which comes into motion under the action of the former and which like all movable system requires a certain play with regard to the chamber that houses it, given that it is essential to avoid possible friction which would reduce the sensitivity of the measuring part, which inevitably causes volumetric losses, in other words, a small part of the flow "will escape" through said play.

In this way, the multiple leaks (microleaks) that are normally produced in the different consumption points, implies a large amount of liters of wasted water and which is also not counted by the utility companies.

On the other hand, in certain centralized hot water installations a user may have to let a lot of water flow until the water reaches him at the desired temperature. This happens especially to users on live on floor far away from the centralized heaters. This causes the user to have to pay a large amount of cold water at te price of hot water. since conventional meters count all the water consumed, irrespective of the temperature thereof.

A prior art device as per the preamble of claim 1 of this patent is disclosed in EP-A-0 100 844. A further prior art device is disclosed in EP-A-0 011 787.

### DESCRIPTION OF THE INVENTION

The implicit problem of conventional meters can be corrected if instead of directly taking the movement of the measuring part as the basis for the measurement, said movement is compared with a data base in which the differences between said movement and the real volume of the corresponding fluid have been previously recorded.

This aim is achieved by means of the invention as claimed by use of an electronic circuit, which receives the signal transmitted through a magnetic sensor, compares said signal with the data stored in the memory thereof, processes and corrects the information and provides the value of the real consumed volume.

In the fluid meters, whose operation is based on the movement of a part under the effects of the fluid that must be measured, there are preferred embodiments that consist of a blade rotor or a turbine rotor, though other embodiments, such as swing movements, alternating movements, etc., are not excluded.

To simplify the description, as of now, we will call the movable measuring part of the meter rotor, which in any case, must be able to send a magnetic signal with a frequency proportional to the movement of the same, which passing through the walls of the leakproof body of the meter, is collected outside by any magnetic sensor system.

The electric signal is led to an electronic comparing circuit that digitalizes said signal.

Up to here there is a perfect relationship between the signal emitted by the measuring part and the digitilized signal, but as it has been explained above there is no direct proportionality between the flow that flows in each moment and the movement of the rotor.

In any way whatever this non-proportionality has a historic base for each standard meter, it is a question of making the corrections necessary to transform the non-proportionality of the signal emitted by the measuring part into an output of data proportional to the flow, which is perfectly achieved with the electronic correction system, object of the invention. In order to effect the electronic correction system (ECS) of a meter, it is obviously necessary to know first of all the features of the measuring part of the same, in other words, the degree of deviations of the non-proportionality in the entire range of measurement of the meter.

For this purpose, the standard meter is placed on a very precise and reliable test bed, which supplies exact flows from the minimum to the maximum range of measurements of the meter, without any limitation in the staggering of the latter, which are made to pass successively through the rotor. From here the frequency of the rotor that corresponds to it may be obtained and by means of a simple mathematical calculation, one can obtain for each possible frequency of the rotor, the number of rotations of the rotor that corresponds to a certain volume unit (square feet, gallons, liters, etc.)

This information is included in the memory of the electronic system of the meter to achieve the automatic correction of the same.

In a non-restrictive preferred embodiment of the electronic correction system, an ASIC circuit (specific application integrated circuit) is used though in certain cases the same function can be carried out with a microprocessor or microcontroller (microprocessor with memory and peripherals).

The ASIC will periodically measure the digitalized rotation frequency, and will calculate the number of rotations of the turbine that correspond to each unit of volume.

Afterwards only the number of rotations of the turbine needs to be counted and an impulse will be emitted upon accumulating a unit of volume each time the number of rotations of the rotor is equal to the number of rotations of rotor per unit of volume calculated previously.

On the basis of the described technique, the meter itself is preferably capable of effecting a series of tests and thus it can control the following information:
I. Leakage finding. The meter is capable of counting water as of flow much lower than the flows used in formal conditions for home consumption, whose consumption at these flows tends to be due to water leaks.
   When the meter detects a water or fluid consumption under a given level, during an extended period of time (such as 1 minute for example), an indication is activated in the gage or indicator of the meter, such as a red blinking drop of water.
   The level of flow below which the indication of continuous low flow consumption is activated, can be designed for each type of meter by means of the writing of this parameter in the nonvolatile configuration memory.
II. Storing obtained information. The meter uses a nonvolatile memory device that permits the last "index" of the meter to be re-established after an electric power supply failure (for example a dead battery), the index being the indication of the display of the meter.
   For this purpose, the meter includes a nonvolatile memory element that can be written and erased electrically, wherein the index is written each time it changes significantly (for example it may be done every 10 liters, 10 gallons or 1 cubic foot.)
III. Count only hot water: The meter that is described in the present specification, among other features or possibilities, has the quality of counting the water that passes through it if this exceeds a specific temperature, for which it has a temperature sensor (for example a NTC resistor or thermistor), in contact with the outside part of the water pipe, so that when water flows through the meter, the latter measures the temperature of the thermistor and accumulates the water only it if exceeds the desired temperature threshold.
IV. Electronic adjustment of the meter. The ratio of revolutions per unit of volume (D) of a turbine, varies with flow, giving rise to a curve called the flow curve, which is linearlized or corrected by the meter.
V. Indication of internal fault. The meter includes some self-tests that permit to self-diagnose some types of faults, so that upon detecting any fault the error bit is activated and a signal in the gage or indicator of the meter (for example a red "E") is displayed.
   For this purpose the system has and up dates redundant information of the memory stored in the nonvolatile memory, such as an EEPROM and in part of the RAM using 16 bit CRC (Cylic Redundance Check) codes for redundancy.
VI. Indication of the state of the batteries. On the screen, display or LCD of the meter, there is an indication of a battery drawn with a mark and three segments inside it codifying the amount of battery that the meter still has available to it, according to a pre-established criterion.
VII. Duplex meter-remote control communication. The meter establishes a duplex communication with the remote control telereader, whereby it permits instructions to be sent to read specific information located in any part of the RAM or of the nonvolatile memory such as an EEPROM of the meter, so that some of the information can be modified from the communication interface, and likewise permit the giving of remote instructions to electrovalves and other special elements.
   For this purpose, all of the meters have a duplex communication interface with the remote telereader element, being a serial communication, and the communication is sent by the meter along the SDATA line and is received by the meter through the SEL line, so that the micro-processor decodifies the orders received and carries out the action entrusted thereto.
VIII. Connection between meters. Meters include internal connectors preferably two in number, through which one has access through the respective screw-on covers, so that in those installations where the meters are grouped together (batteries or cluster of meters) all of them can be connected to each other, forming a connection chain using a single transmission bus, making it possible to obtain a reading of all of them, from one point or else transmit the distance by different means (telephone line, optic fiber, etc.)
   Likewise, the connection between meters is valid in all of those places wherein there is more than one meter, such as for example, in centralized systems, as all of them can be connected together, and information can be obtained in one of them or in an outside concentrator.
   The big advantage that this connection has is that upon being an inside connection the degree of safety is higher and besides it is cheaper to install as no concentrator is needed to obtain information from all of the meters.
IX. Electronic transmission of information. The transmission of all the information of the meter is digital, in other words, neither wheel positionings nor connectors are read, but rather the information directly from the meter, so that mechnical errors due to the wear of contacts, maladjustments, breakage, etc. are eliminated.
   In short, the meter does not transmit impulses, or contact positions, but rather it transmits digital information directly.
X. Consumption control by means of a prepayment card. The meter itself can include a card reader to control consumption, in such a way that it permits consumption of a predetermined amount of fluid, and when said amount is exceeded the meter closes an electrovalve preventing additional consumption.
   Hence, the user or users will have his (their) own card (for example a magnetic strip card, a chip card or a smart card), it being possible to have access to water consumption by means of the card until a predetermined amount in the same is consumed.
XI. The meter itself stores the information. The meter itself, without the need of any outside equipment, stores different data at specific time intervals, which makes it possible to know a series of data to carry out different studies.

Hence, with the storage of consumption each certain time interval histograms, analysis of microleaks (etc.) can be done having the possibility of introducing and controlling variable rates.

This information can be extremely important, since at a given moment variable rates can be introduced, according to the consumption time, whereby consumption can be encouraged, making consumption cheaper at certain hours.

This can be very important in certain places wherein consumption is very large (for example big cities), since if due to the location of the city, the water must be raised up to the tanks (energy expenditure), consumption at those hours when a reduced rate for energy consumption is stipulated can be encouraged, all this representing a considerable energy saving.

In order to complete the description that is going to be made hereinafter and for the purpose of providing a better understanding of its features, a set of drawings in whose figures the most significant details of the invention are represented in an illustrative and non-restrictive manner, are attached hereto.

### BRIEF DESCRIPTION OF THE DRAWINGS

Figure 1 shows a graph wherein the parameters that define the precision of a conventional meter are represented.

Figure 2 shows a series of graphs which represent the characteristics of the metrological classes A, B, C and D, as well as the new meter corrected with the electronic correction system (ECS).

Figure 3 shows a characterization of the rotor on the test bed, in other words, the frequency at which it turns for each possible flow.

Figure 4 shows a block diagram of the electronic correction system.

Figure 5 shows a frequency meter schema.

Figure 6 shows the data base schema.

Figure 7 shows the programmable divider schema.

Figure 8 shows a perspective view of an embodiment of a meter wherein one can see how the screen or display remains placed upon a slanted plane in order to make it easier to see the same.

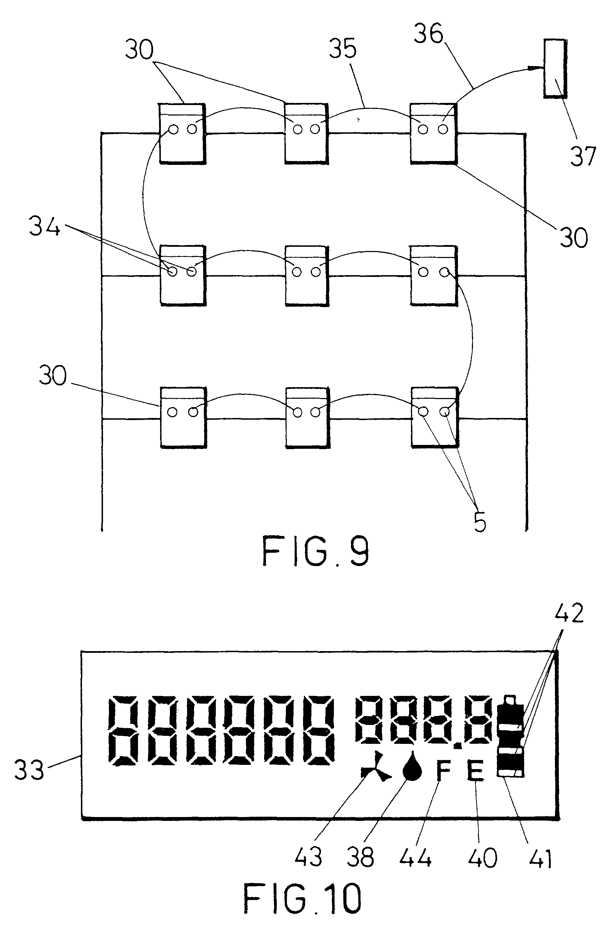

Figure 9 shows a schematic view of a series of meters connected together, by means of the pair of internal connectors that they have. It is possible to read an outside connector or else directly a meter thus eliminating the concentrator.

Figure 10 shows a detailed view of the screen or display wherein the different readings as well as the indicators of different functions appear.

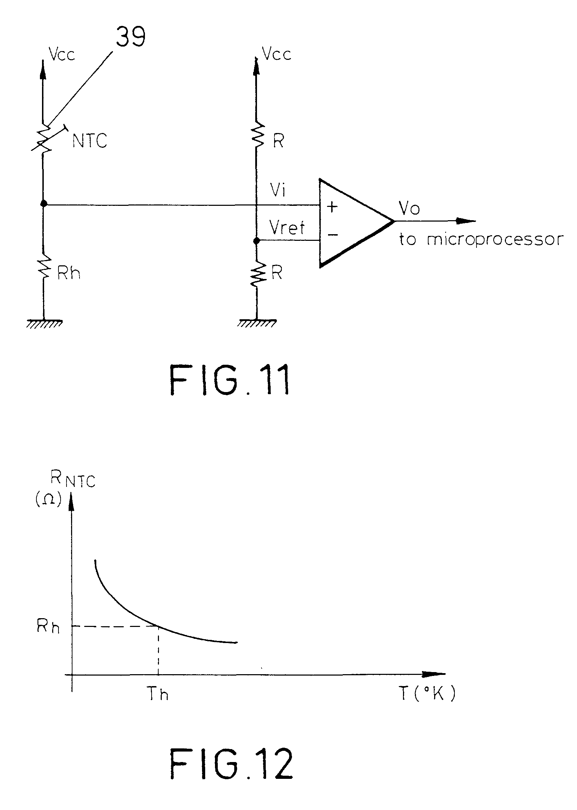

Figure 11 shows a schema of how the detection of temperature by thermistors, to permit the meter to count only the hot water as of a predetermined temperature, takes place.

Figure 12 shows the ratio between the ohmic resistance of the NTC (R_{NTC}) and the temperature, as well as the way to graphically calculate the value of Rₕ for a threshold temperature Rₕ.

Figure 13 shows a flow curve representative of the ratio existing between the revolutions per unit of volume of a turbine and the flow.

Figure 14 shows the schema of the duplex communication interface, between the meter and the remote control element.

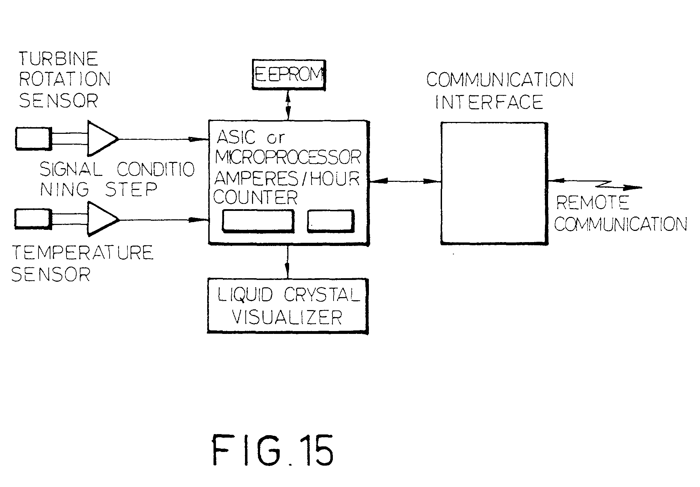

Figure 15 shows a block diagram wherein the different elements of the meters are seen.

### DESCRIPTION OF A PREFERRED EMBODIMENT

In order to emphasize the importance of the invention that is described in the present specification, we are going to describe a series of figures that are represented in the attached designs, and as in figure 1, we can see how there is an uncontrolled area in conventional meters, the measuring starting from a minimum flow Qmin up to a transition flow Qt, with a range of error of ± 5%, and an area until a maximum flow Qmax with a range of error of ± 2%.

The characteristics of the metrological classes A, B, C and D and of the meter corrected with the electronic correction system are represented in the designs of figure 2.

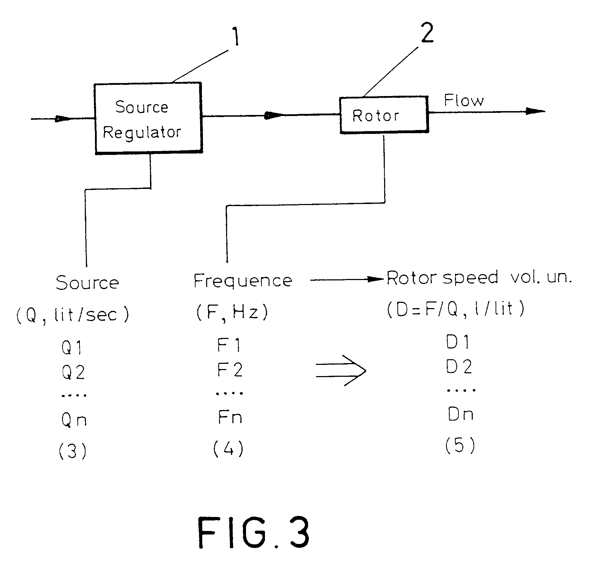

In order to make the automatic correction, it is necessary to know first of all the features of the rotor, in other words, the frequency at which it turns for each possible flow. This can be done by means of prior tests on a test bed just as is represented in figure 3.

Hence, different tests are carried out adjusting the flow of the fluid that passes through the meter, by means of a flow regulator (1). In this way, the frequency (4) of the rotor (2) that corresponds to it can be obtained for each flow (3), and thus for each possible frequency of the rotor it is possible to obtain the number of rotations of the rotor, that correspond to a specific unit of volume (liters, gallons, cubic feet, etc.)

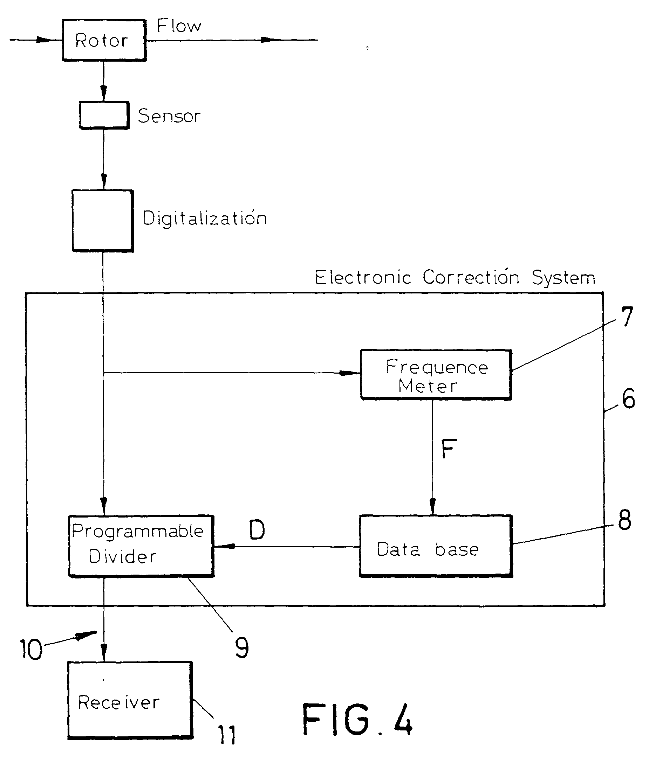

In figure 4 we can see how the electronic correction system (6) includes a tachymeter or frequency meter (7), that measures the number of times that the digitalized signal changes, comparing it with a standard oscillator.

Calculating the "D" (8) number of cycles of the rotor per unit of volume, can be done by consulting the data base contained in the memory of the ECS by means of logical equations done by gates, etc.

The programmable divider (9) is made with one or several preselectable binary counters.

The resulting volume impulses (10) can be sent to a remote accumulation unit (11) or they can be accumulated by the ECS itself.

Other equivalent forms of correction are also possible. Hence, all the above cited operations can be carried out working in periods of the rotor instead of frequencies. The period is the reverse of the frequency. Instead of obtaining for each frequency the number "D" of rotations of the rotor per unit of volume, it is also possible to obtain the amount of volume "V" corresponding to one rotation of the rotor and increasing this volume in the meter at each rotation of the rotor. In this case "V" is reverse "D".

Given that the information is in an electronic format, this information can be easily shown by liquid crystal displays or other type displays and transmitted by any means: infrared light links, optical fiber, etc., direct or dedicated direct conductor cables, telephone lines, low voltage networks, private television networks, magnetic waves and electromagnetic waves through the air, magnetic coupling, radio, etc.

In this way, the problems of precision in conventional meters are overcome, achieving the correction of the non-proportionality between the movement of the measuring part and the real volume of the flow, obtaining a very precise consumption reading in the entire range of measurements of the meter.

Consequently, this makes it possible to eliminate the increase of the margins of error that are presently accepted in the low range of the measurements, at the same time that the uncontrolled area is reduced, starting the correct measurement of the meter at smaller flows as has been shown in the diagram of figure 2 in the section of the meter with ECS.

Taking into account that most conventional meters presently manufactured belong to class B, it is necessary to emphasize the noteworthy increase of precision and improvement of the sensitivity that the proposed invention provides without, on the other hand, said diagram of the meter with ECS having to imply any restriction of subsequent advances of this new technology.

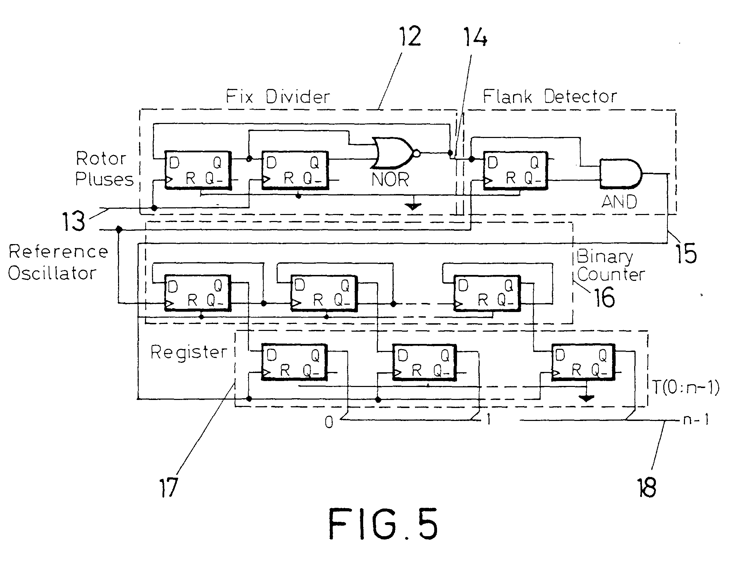

A way to find the frequency of the rotor is represented in figure 5; specifically, the circuit finds the period of the rotor, the frequency simply being the reverse of the period F=l/T.

In it, there is a first fixed divider (12) that divides the digitalized input impulses (13) by the number of magnetic pairs of the rotor in the figure which has been assumed to be 3, obtaining a signal (14) whose frequency coincides with the frequency of the rotor. This signal is connected to a flank detector that produces a signal or impulse (15) for each complete rotation of the rotor. This signal (15) produces two effects:
* It resets a counter (16) which increases by 1 at each cycle of a standard oscillator.
* Right before resetting the counter (16) using the delay of the same circuits, it charges the value of the meter in a latch (17).

Inasmuch as the value of the counter (16) upon being charged in the latch (17), is the number of cycles that the master clock has effected during a complete cycle of the rotor, the latch really contains the period of the rotor measured by the number of oscillations of the standard oscillator and codified in n bits (18).

It is very important to emphasize that the period or frequency of the rotor is obtained by taking a complete rotation of the same, by means of a fixed divider (12) whereby greater precision of the correction system is obtained, given that in this way the problem that could arise in the event that the different magnetic signals emitted by the rotor of a rotation were not of the same intensity, is avoided.

If it is necessary to obtain the frequency, it can be obtained by calculating the reverse value of the period or else directly by means of a circuit different from that of the figure, counting the number of impulses of the rotor in a relatively long unit of time, generated by a standard oscillator.

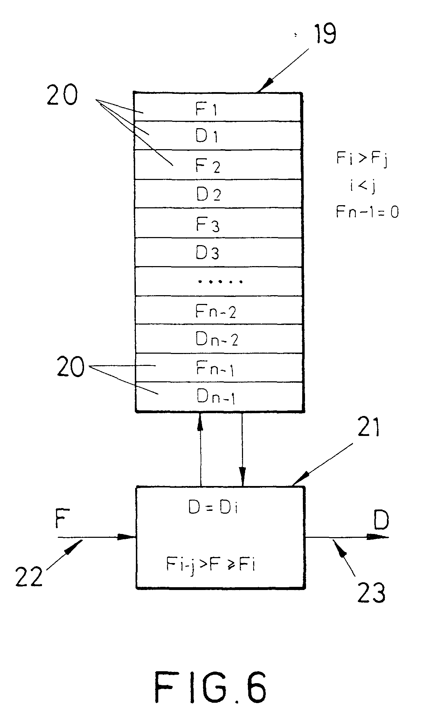

In figure 6 one can see a possible embodiment of the data base, in other words, the way to obtain the division coefficient "D", from the frequency "F", calculated by the frequency meter, using the information stored in the memory, that contains the frequencies "Fi" and the division coefficients "Di" that correspond to them. Said correspondence has been obtained by previously characterizing the meter in the laboratory.

The embodiment uses a memory (19) that will normally be a nonvolatile semiconductor memory, of a ROM, EPROM or EEPROM type. In the memory there are the values of the frequencies Fi and the values of the division coefficients that correspond to Di in alternate words (20).

As a matter of fact, each division coefficient Di will be applied for any frequency, comprised between Fi and Fi₋₁, in such a way that Fₙ₋₁ must be equal to zero.

A logical circuit (21) will have the frequency F (22) coming from the frequency meter as the input, will read the memory from the beginning F1, until it finds Fi, so that F ≥ Fi. Once this has been obtained, the following position of the memory, which will contain the value Di that will be deposited in the outlet D (23) which wil be used by the programmable divider, will be read.

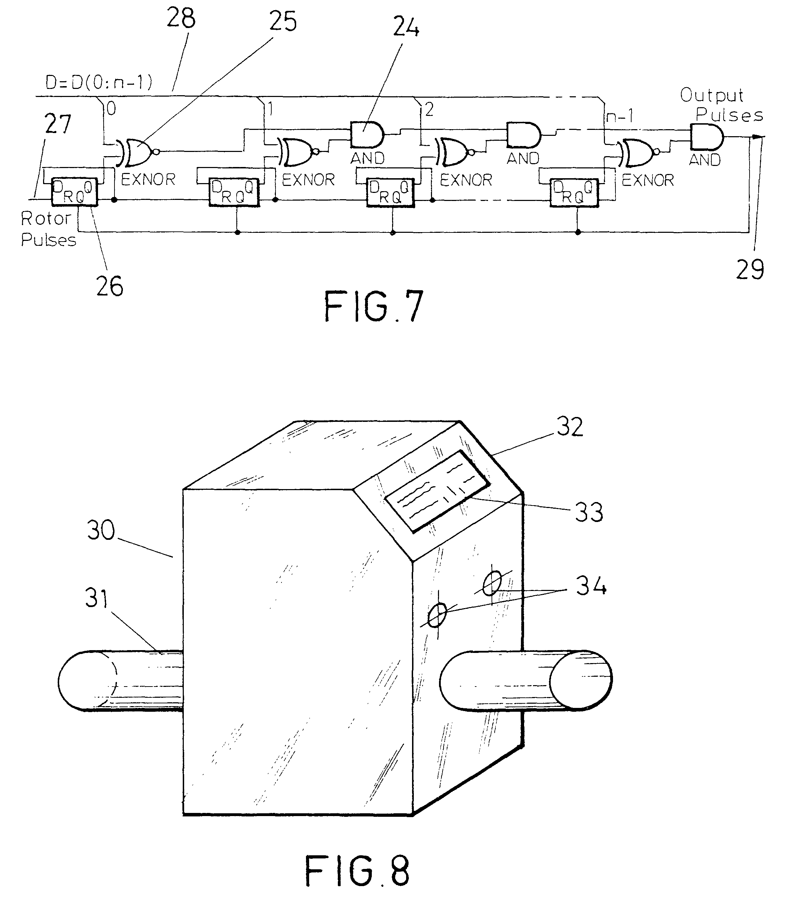

Finally, in figure 7 there is a possible embodiment of a programmable divider, it being possible to use three types of logical circuits: AND type gates (24), exclusive NOR type gates (25) and type D bistable flip-flops (26). This embodiment is apt to be integrated in an ASIC, using elements of the manufacturer's bookshelves, or else with logical circuits SSI, such as those of the family 74LS, 74HC, etc. In the event of a microcontroller or microprocessor, an inside counter effected by software, with or without the help of some specific hardware, must be used.

In figure 7, one can see how the impulses (27) of the rotor enter at the left already digitalized and will enter as rotations of the rotor, multiplied by the number of magnetic poles that the rotor has. There is also the division coefficient D (28), in other words, the number of impulses of the rotor per unit of volume codified in a binary format with n bits of zero resolution at n-1. For example, if D is equal to 23 and n is equal to 6, it must be codified in the input: 010111. If a circuit like the one indicated is built, at its outlets (6) an impulse will appear each D of input impulse. In this case, D is the number of impulses per unit of volume, and the circuit will produce an impulse at the output for each unit of volume of fluid that passes through the meter.

This is all achieved at a reasonable cost, so that the service-price ratio is perfectly competitive on the market.

An additional improvement that the ECS implies is that the requirements of precision of the movable parts of conventional meters, necessary to obtain a homologable product according to present regulations, become much less important, given that with the proposed invention the necessary corrections may be made so that the final measurement is correct, which represents an additional benefit in terms of production costs.

Basing ourselves on a practical embodiment of a meter, object of the present invention, and in view of figure 8, we can see how the meter (30) is crossed by conduction (31), the screen or display (33) remaining with a surface positioned according to an inclined plane that enhances the display of said display, inasmuch as in terms of one of its surfaces, the meter (30) is provided with a pair of screw-on covers which upon being screwed off allow access to the respective inside connectors through which a series of meters may be connected to each other, by means of the corresponding connection cables (35), the reading being done directly upon one of the meters (30), or else on a outside connector (37) that remains connected to one of the meters by cable (36).

Likewise, on the display (33) of the meters, different indications appear such as a signal (43) that indicates that water is passing through the meter, a signal (44) that can indicate different uses such as the indication of operation of the meter, the passing through of cold water, the passing through of hot water, fraud, etc.

Hereinafter we are going to make a detailed description of all the functions that the meter can carry out without the need of any outside equipment:

### A) Leakage finding

More specifically, it may be considered as detection of continous consumption at a low flow.

As it has already been indicated meter (30) is capable of counting water at flows much lower than the flows used in normal conditions for home consumption, consumption that tends to be due to water leaks.

Hence, when the meter (30) detects a consumption of water or fluid below a given level for an extended period of time (for examine 30 minutes), an indication is activated in the display or indicator (33), said indication having the possibility of being a red and blinking drop of water (38).

The level of flow below which the indication (38) is activated can be configured for each type of meter by means of the writing of this parameter in the nonvolatile configuration memory.

When the meter is read using remote reading (AMR = Automatic Meter Reading) this information is transmitted, thus it being possible to detect leaks from a remote reading point.

For this purpose, the meter continuously measures the period of rotation of the turbine, compares this period with the one corresponding to the level of flow programed in the nonvolatile memory and if it is longer than more than 30 minutes, the microprocessor activates indication (38.) If the period of rotation of the turbine is longer this obviously means that the flow is less.

When this indication (38) is activated the meter continues to indicate and to count the water that passes through it, but it also makes the indication of a drop of water (38) blink on the screen, display or LCD (33.) In the event that a leak persists, the meter starts to count the fluid at a normal flow, the indication remains lit up, without blinking, so that the leak can be detected, even in the event that the meter is read manually or automatically, right when the flow is not a leak but rather a higher one. The indication disappears only when the flow passes to O or to such a small flow that the turbine is not made to rotate.

### B) Storing the figure

A known disadvantage of electronic systems is the "volatility" of the information, that is to say, when for any reason there is an interruption in the energy supply, stored information is lost. Contrarily, in mechanical and electromechanical systems information tends to be stored even in the event of an interruption of the electric system, if it is used.

Meter (30) uses a nonvolatile memory device that permits one to re-establish the last index of the meter, after a failure in the electrical supply, for example, a battery goes dead, or the replacement thereof.

Even if the meter is destroyed as an act of vandalism, it is normally possible to know the index that the meter had before it was destroyed. To overcome this inconvenience, up until a few years ago the only valid alternative that electronic systems had to store information in a nonvolatile way was to use a magnetic medium in any of its many variants (hard disk, drums, floppy disks, magnetic tapes,) For some years now there are some nonvolatile memory elements that can be written or erased electrically (for example, EEPROM: Electrically Erasable and Programmable Read Only Memory).

Hence, the meter (30) includes one of these elements and writes in it the index each time it changes significantly. The reason why the nonvolatile element is not written on each time the index changes is because these devices have a limited number of writings.

For example, we can indicate that for a home meter each 39 liters, 39 gallons or 30 square feet can be written in the nonvolatile element. In the event of having to retrieve the nonvolatile element the information would be retrieved with the resolution used in the writings (39 liters, 39 gallons or 30 square feet.)

This represents a small loss of information, but it is really inappreciable, taking into account that it will only be used under special circumstances.

Although the meter is destroyed by vandalism, it is very improbable that the nonvolatile memory element is destroyed, due to its small size (less than 50 mm²), which makes it possible to know the value of the index of the meter before it was destroyed

### C) Count only hot water

In certain installations of centralized hot water installations, one user can make a lot of water flow until the water that reaches him at the place of consumption is at the desired temperature. This especially happens to users who live on floors far away from the centralized heater. This causes the user to have to pay for a large amount of cold water at the price of hot water, since conventional meters count all of the water, irrespective of its temperature.

On the contrary, the meter object of the present invention can count only the water that passes through it, if the water exceeds a certain temperature. For this purpose, the meter (30) has a temperature sensor (for example a NTC resistor: Negative Temperature Coefficient Resistor or a Thermistor), in contact with the outside part of pipe (31). The probe is capable of detecting the temperature of the water very precisely, since the difference of temperature between the water and the outside part of the meter is small due to the low height of the water in the meter and due to its high thermal conductivity.

When water flows through the meter, the latter measures the temperature of the thermistor and accumulates water, only if the water exceeds the desired temperature threshold. This operation is very difficult to carry out in a mechanical meter, but it is considerably simpler to control by a microprocessor or other electronic circuits, such as is the case of meter (30).

The value of the resistor of the thermistor varies with the temperature exponentially, as it appears in figure 33. If it is desired to have the meter count only the water that exceeds a certain temperature Tₕ, the electric resistor thereof at that temperature, which we will call Rₕ, must end at the characteristic curve of the thermistor. Now, only the circuit of the top part of figure 33 needs to be manufactured. This circuit contains a variable voltage divider, with the temperature, done by means of the thermistor and a fixed resistor of value Rₕ . It also contains a fixed divider with two resistors of an equal value R, so that they create a reference voltage V_{ref}=V_{cc}/2. These two signals are connected to an analog comparator, whose output V_{O} is connected to the microprocessor or control circuity.

If the water temperature is lower than Tₕ the resistive value of the thermistor will be higher than Rₕ, whereby the value of the variable divider Vᵢ will be lower than the fixed divider value V_{ref} and the output of the comparator will be a logical O. This indicates to the microcontroller or control circuitry that the water must not be totalized.

If the water temperature is higher than Tₕ the resistive value of the thermistor will be lower than Tₕ whereby the value of the variable divider Vᵢ will be higher than the value of the fixed divider V_{ref} and the output of the comparator V₀ will be a logical one. This indicates to the microcontroller or control circuitry that the water must be totalized, since the temperature thereof is high enough.

### D) Electronic adjustment of the meter

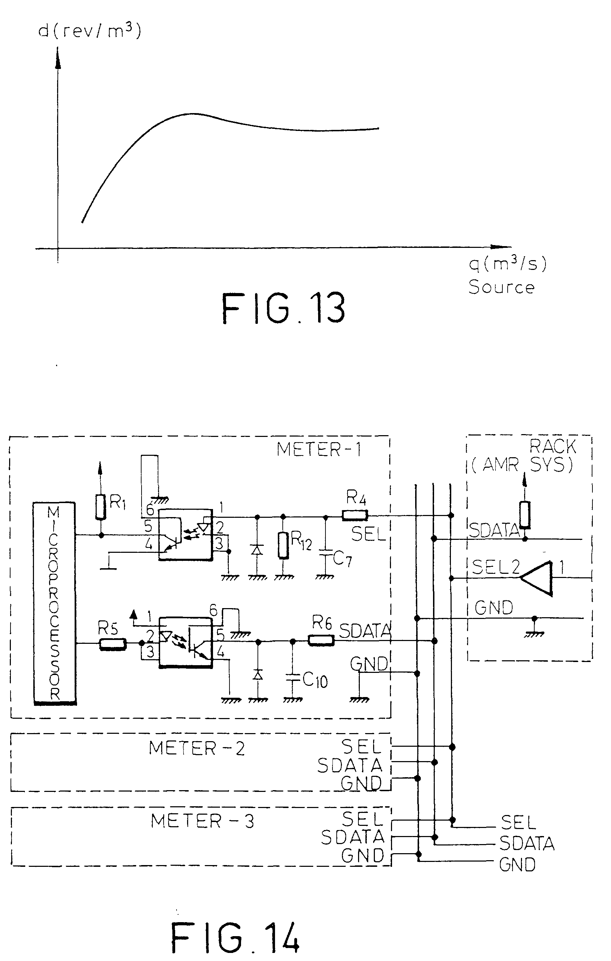

The ratio of revolutions per unit of volume (D) of a turbine varies with the flow (Q) giving rise to a curve similar to that of figure 13 which we will call flow curve.

The flow curve is linearized or corrected by the meter (30). However, this linearization is not done according to a generic flow curve, but rather it adapts to each specific meter, obtaining high quality linearization, despite there being appreciable variations in the characteristics of the turbines.

Therefore, the turbines must be previously characterized to find a standard curve, the variability of the turbines with regard to the standard curve for the entire range of flows and a standard deviation.

Once this statistical information has been collected, the flow curve of a specific turbine can be very precisely extrapolated, making measurements in only three points of the curve thereof (three flows.)

The process to be followed is the following:
30. The turbines are studied until a precise and reliable deviation model is achieved.
31. Coefficients are found for each turbine: (D: revolution per unit of volume), for three flows (Q).
32. Using the deviation model and the empirical information, the real curve of the turbine is calculated in a computer.
33. This curve is written in the nonvolatile linearization device, achieving great precision of the meter.

### E) Indication of an internal fault

The meter (30) includes some self-test possibilities that make it possible to self-test some types of faults. If a fault is detected the error bit lights up and an indication (40) lights up on the screen or display (33), consisting of a red letter E. This information is also transmitted when remote reading of the meter takes place.

Hence, the system has and up-dates redundant information from the information stored in the nonvolatile memory such as an EEPROM and in part of the RAM. CRC (Cyclic Redundance Check) 16 bit codes are used for redundance.

All the information contained in the nonvolatile memory such as the EEPROM is duplicated in the RAM, each one with its corresponding CRC code. When the nonvolatile memory is modified, for example the EEPROM, also its CRC is modified. Periodically, for example once a day and each certain number of units of volume of counted fluid, the consistency of the redundance system is verified, in other words, the corrections of the CRCs is tested.

If a CRC is not correct (for example of the nonvolatile memory an EEPROM), the correction of the CRC of of another device (for example of the RAM) is verified and if it is correct the information of the device with the correct CRC is re-established; if both CRCs are incorrect, the information is irretrievable, hence the error system is activated.

### F) Indication of the state of the batteries

On the screen, display or LCD of the meter (30) a battery (41) is represented according to three segments (42), which can be lit up or off, codifying the amount of battery that is still available to the meter, according to a pre-established criterion (for example 3 segments: more than 25% of the battery available; 2 segments: more than 41% of the battery available; 1 segments: less than 41% and correct operation; no segment lit up; voltage too low and possibly incorrect operation.)

This information is likewise accessible from the remote element, making it possible to have a predictive maintenance to change the battery when it is considered convenient to maintain the perfect operation thereof. The batteries that the meter uses can be lithium batteries that give rise to a certain amount of charge measured in coulombs or ampere-hours. One of the best ways to know the amount of available charge is to count the amount of consumed charge.

The meter has inside an ampere-hour meter. This way it is possible to know the amount of battery consumed and therefore the amount of available battery, depending on whether or not this amount exceeds the different thresholds of the above mentioned pre-established criterion, the segments 42 of the battery light up or turn off.

Given that the information of the ampere-hour meter is inside the microprocessor or calculation device used, the most significant part of the same may be transmitted during the remote reading of the meter, obtaining a much greater resolution than that which is shown on the LCD.

In order to make an ampere-hour meter, the amount of charge of the battery consumed per unit of time by the meter in each one of its possible states must be characterized. It must be done by measurements on the test bed and using the information of the manufacturers of the different components that the meter includes. Once this information is available, the processing device will only have to accumulate in each unit of time, the amount of charge consumed per unit of time, depending on the working mode in used.

Aside from the ampere-hour meter there is a hardware detector of the voltage supplied by the battery. If this voltage is below the minimum operating voltage of the meter all the segments of the battery are erased, which indicates that the battery is about to go dead, and that the meter may already operate incorrectly.

### G) Duplex meter-remote control communication

The meters with remote reading capacity, are only capable of sending a certain amount of information from the meter to the remote reading receiver. The remote element is only capable of activating the remote reading functions.

The meter object of the present invention is capable of establishing duplex communication with the "remote reading element." This allows instructions to be sent to read specific information located in any part of the RAM or nonvolatile memory such as an EEPROM of the meter, such as that which has been written in the memory itself of the meter and that which the meter itself calculates and stores without the need of using any outside equipment. Thus, we can indicate:
* Serial number of the meter
* Type of meter
* Maximum flow of the meter
* Minimum flow to activate the leak detector indicator (38)
* Preprogrammed consumption in each one of the modes
* Year, month and day of verification of the meter
* Homologation number of the model
* Meter index
* Values of the internal redundance CRCs
* Curve written in the meter
* Present operating state
* Instant rotation speed of the turbine, which allows one to determine the instant flow
* The value of any inside variable of the meter
* State of the electrovalves (on/off)
* Time during which the meter has been counting water
* Time during which microleaks have been detected
* Number of starts of the meter
* Time during which the meter has been counting different preset flows or flow intervals

Some of this information may also be modified from the communication interface and likewise, remote instructions can be given to electromechanisms, such as for example electrovalves and other special elements.

For this purpose, the meters have a duplex communication interface such as that represented in figure 14.

This interface permits duplex communication between the meter and the remote reading element, the communication being a series communication and the information is sent by the meter along the SDATA line and is received by the meter along the SEL line.

The microprocessor decodifies the orders received and carries out the order sent: activation of electrovalves, sending selected information, etc.

The duplex communication system uses a classic electric interface system, using optocouplers.

Referring to figure 14 we can see how the signal coming from the Rack or the automatic meter reading (AMR) is the SEL signal, which enters the diode of the first optocoupler whose light polarizes the base of the output transistor, whose collector along with a pull-up resistor connects to the microprocessor. The diode, the capacitor C₇ and the resistor R₁₂ act as passive protection elements. This subsystem makes the communication channel from the remote reading system to the microcontroller of the meter.

The signal that comes from the microcontroller is connected to the diode of the second optocoupler with the user of a resistor R₅ for the limitation of the current. The light that the diode emits polarizes the base of the transistor that is connected to the SDATA signal of the remote reading system. The remote reading system must include a pull-up resistor, since the outlet of the meter is an open collector. The resistor as well as the diode and the capacitor are used as circuitry protection elements. This subsystem makes the communication channel from the microcontroller of the meter to the remote reading system.

### H) Connection between meters

The meters (30) include some inside connectors (34) preferably two in number, to which there is access through the respective screw-on covers, so that in those installations where there are several meters grouped in a battery, in the meter room or connected together those of the different dwellings of the building, all of them can be joined together by means of the corresponding connection cables (35), permitting the reading of all of them, either in an outside connector (37) joined to a meter (30) by cable (36) or else directly one of the meters.

Hence, a savings in the installation is produced, since it is not necessary to take a cable from each one of the meters to a concentrator, at the same time that the latter is not necessary either.

In the designs of figure 31 one can clearly see how the meters are grouped together in a battery of meters.

### I) Electronic transmission of information

The transmission of all the information of the meter is digital neither positions of wheels nor connectors are read, but rather the information of the meter is read directly, in such a way that mechanical errors due to wear of the contacts, misadjustment, breakage, etc. are eliminated.

In short, the meter does not transmit impulses or contact positions, but rather it only transmits digital information.

### J) Consumption control by means of a prepayment card

The meter itself can include a card reader to control consumption, so that it permits consumption of a predetermined amount of fluid and when said amount is exceeded the meter closes an electrovalve preventing additional consumption.

Thus, the user or users will have his (their) own card (for example a magnetic strip card, a chip card or a smart card) it being possible to have access to water consumption by means of the card until the predetermined amount of the same is used up.

### K) The meter itself stores the information

The meter itself without the need of any outside equipment stores different data at specific time intervals, which allows one to know a series of data to carry out different studies.

Hence, with the storage of consumption for a certain time interval, histograms, microleak analyses, etc. can be carried out, having the possibility of introducing and controlling variable rates.

This may be very important in certain places in which the consumption is large (for example big cities), since if due to the location of the city, the water must be raised from the tanks (energy expenditure), consumption at those hours where a reduced rate for eneergy consumption is stipulated can be encouraged, all this representing a considerable energy saving.

In short, the meter itself stores characteristic information (serial number, type of meter, etc.) and calculated information (time of leaks, time at different flows, number of starts, etc.)

Hence, it stores and can transmit information such as:
* Operating time of the meter
* Time during which the meter has been detecting microleaks
* Time during which no water flows
* Time during which water at a flow or preset flow interval has been counted
* Number of starts carried out (start: going from flow O to a measurable flow. It is important since one of the factors that affects the aging of meters is the number of starts. Hence, statistics concerning duration, etc. can be made.)

The meter has an oscillator or clock with 32,768 Hz which is very precise. By means of its use it is possible to measure time precisely. The meter also knows at all times in what state it is in, regarding the consumption of water: there is no consumption, consumption is normal or there is consumption at a leak flow. By combining this information, the meter can totalize by means of software how long water has been consumed at a normal flow, how long water at a leak flow has been consumed and how long the meter has not operated. It can also write the number of starts, in other words, the number of times that no flowing water has passed to a leak flow, and to a normal flow. This information is stored in the inside memory of the microprocessor and can be obtained by means of the communications interface, this information being very useful for utility companies.

## Claims

1. Fluid meter, including a measuring part (2) arranged to be moved by the fluid and an electronic correction system (6) including a data base (8), wherein the electronic correction system (6) is arranged to periodically measure the frequency of movement of the measuring part;
**characterized in that**
the data base (8) includes information relating frequencies of movement of the measuring part (2) with corresponding numbers of movements that correspond to a certain unit of volume of the fluid;
the electronic correction system (6) is arranged to determine, for the measured frequency of movement of said measuring part (2) and using said data base (8), the number of movements of the measuring part that corresponds to said unit of volume;
the electronic correction system further being arranged to count the number of movements that the measuring part makes and to emit an impulse each time it accumulates a number of movements that corresponds to the number of movements that has been determined to correspond to said unit of volume.

2. - Fluid meter, according to claim 1, **characterized in that** the electronic correction system (6) includes a tachymeter or frequency meter (7) and a programmable divider (9), arranged in such a way that the frequency meter (7) measures the number of times that the signal produced by the measuring part and captured by the sensor in a period of time changes, while the calculation of the number of cycles of the measuring part per unit of volume, is made by consulting the data base (8), the programmable divider (9) including one or several preselectable binary counters (16) with the particularity that the resulting impulses of volume can be sent to a remote accumulation unit, or else be accumulated by the electronic correction system itself.

3. Fluid meter, according to claim 1, **characterized in that** the electronic correction system is applicable to all types of meters that have or can have magnetic or another type of transmission, of the signal of moment of the measuring part.

4. Fluid meter, according to any of the above claims, **characterized in that** the meter (30) has a slanted surface (32) on which there is a screen, display or LCD (33) on which the information appears and likewise on one of its surfaces it has a pair of inside connectors (34) sealable by respective screw-on covers, through which several meters (30) of an installation can remain joined together by respective cables (35), it being possible to obtain the reading by an outside connector (37) connected to a meter by the corresponding cable (36) or else directly from a meter, it being provided for that the meter itself carries out different functions and stores data for which it includes a microprocessor, a nonvolatile memory such as an EEPROM, a temperature sensor or thermistor in contact with the outside part of the tube where water flows, as well as a battery whose consumption is controlled by an ampere-hour meter, with the particularity that the meter has a duplex communication interface with a remote control element.

5. Fluid meter, according to claim 4, **characterized in that** the meter (30) is capable of detecting microleaks, for which the period of revolution of the turbine is measured continuously and compared with the level of flow programmed in the nonvolatile memory, in such a way that if it is longer than a predetermined period of time, an indication (38) is activated on the gage or indicator (33) of the meter indicating the existence of leaks, it being possible to transmit this information to the remote control element.

6. Fluid meter, according to claim 4, **characterized in that** the meter (30) is capable of retaining the last index or indication of the consumption produced for which purpose it includes a nonvoltaile memory on which the index is written each time it changes significantly.

7. Fluid meter, according to claim 4, **characterized in that** the meter (30) is capable of counting just hot water, for which reason it includes a temperature sensor or thermistor, coupled externally to the pipe where the water flows, in such a way that the meter measures the temperature of the thermistor and accumulates water, only if it exceeds the pre-established temperature threshold.

8. Fluid meter, according to claim 4, **characterized in that** the flow curve resulting from the ratio of revolution per unit of flow (D) of the turbine is linearized adapting itself to each meter for which purpose there is previously a standard curve of the turbines for the entire range of flows.

9. Fluid meter, according to claim 4, **characterized in that** the meter (30) has a screen or display (33) with an indication (40) of an internal fault, for which purpose the system has and up-dates redundant information from the information stored in the nonvolatile memory and in part of the RAM using CRC codes in such a way that when the nonvolatile memory is modified the CRC is also modified and periodically the correction of the CRC will be verified and if it is not correct the successive CRC of other devices will be verified and in the event that they are not correct the indication (40) of internal fault will be activated.

10. Fluid meter, according to claim 4, **characterized in that** the meter (30) is bed by a battery and for good operation of the meter its charge is controlled by means of an ampere-hour meter, having said information on the screen (33) upon it having the design of a battery with several segments (42) indicating the available charge.

11. Fluid meter, according to claim 4, **characterized in that** the meter (30) has a duplex communication interface, with the remote control element, the information being sent by the meter (30) along the SDATA line and received by the meter through the SEL line, in such a way that the microprocessor decodifies the orders received from the remote control element and carries out the order entrusted to it.

12. Fluid meter, according to claim 4, **characterized in that** the transmission of all the information of the meter is digital.

13. Fluid meter, according to claim 4, **characterized in that** the meter is arranged to store by itself, without the need of any outside equipment, information which may be its own information as well as calculated information.

## Patentansprüche

1. Fluidmesseinrichtung, die einen Messteil (2), der durch das Fluid bewegt wird, und ein elektronisches Korrektursystem (6) enthält, das eine Datenbank (8) enthält, wobei das elektronische Korrektursystem (6) die Frequenz der Bewegung des Messteils periodisch misst;
**dadurch gekennzeichnet, dass**:
die Datenbank (8) Informationen enthält, die Frequenzen der Bewegung des Messteils (2) auf entsprechende Anzahlen von Bewegungen bezieht, die einer bestimmten Volumeneinheit des Fluids entsprechen;
das elektronische Korrektursystem (6) für die gemessene Frequenz der Bewegung des Messteils (2) unter Verwendung der Datenbank (8) die Anzahl von Bewegungen des Messteils bestimmt, die der Volumeneinheit entspricht;
das elektronische Korrektursystem des Weiteren die Anzahl der von dem Messteil ausgeführten Bewegungen zählt und immer dann einen Impuls ausgibt, wenn es eine Anzahl von Bewegungen akkumuliert, die der Anzahl von Bewegungen entspricht, die der Bestimmung zufolge der Volumeneinheit entspricht.

2. Fluidmesseinrichtung nach Anspruch 1, **dadurch gekennzeichnet, dass** das elektronische Korrektursystem (6) ein Tachymeter bzw. einen Frequenzmesser (7) sowie einen programmierbaren Dividierer (9) enthält, die so ausgeführt sind, dass der Frequenzmesser (7) misst, wie oft sich das Signal, das von dem Messteil erzeugt und von dem Sensor erfasst wird, innerhalb eines Zeitraums ändert, während die Berechnung der Anzahl der Zyklen des Messteils pro Volumeneinheit unter Bezugnahme auf die Datenbank (8) ausgeführt wird, wobei der programmierbare Dividierer (9) einen oder mehrere vorwählbare binäre Zähler (16) enthält und wobei die entstehenden Impulse des Volumens zu einer entfernten Akkumulationseinheit gesendet werden oder ansonsten durch das elektronische Korrektursystem selbst akkumuliert werden können.

3. Fluidmesseinrichtung nach Anspruch 1, **dadurch gekennzeichnet, dass** das elektronische Korrektursystem bei allen Typen von Messeinrichtungen eingesetzt werden kann, die für das Signal der Bewegung des Messteils magnetische oder andersartige Übertragung aufweisen bzw. aufweisen können.

4. Fluidmesseinrichtung nach einem der vorangehenden Ansprüche, **dadurch gekennzeichnet, dass** die Messeinrichtung (30) eine schräge Fläche (32) aufweist, an der ein Bildschirm, eine Anzeigeeinrichtung oder eine Flüssigkristallanzeigeeinrichtung (30) vorhanden ist, auf der die Informationen erscheinen, und desgleichen an einer seiner Flächen ein Paar innere Verbinder (34) aufweist, die durch entsprechende Anschraubabdeckungen abgedichtet werden können, über die mehrere Messeinrichtungen (30) einer Anlage durch entsprechende Kabel (35) verbunden sein können, wobei es möglich ist, den Messwert durch einen äußeren Verbinder (37) zu erhalten, der mit einer Messeinrichtung durch das entsprechende Kabel (36) verbunden ist, oder ansonsten direkt von einer Messeinrichtung, wobei vorgesehen ist, dass die Messeinrichtung selbst verschiedene Funktionen erfüllt und Daten speichert, wozu sie einen Mikroprozessor, einen nichtflüchtigen Speicher, wie beispielsweise einen EEPROM, einen Temperatursensor oder Thermistor in Kontakt mit dem äußeren Teil der Röhre, in der Wasser fließt, sowie eine Batterie enthält, deren Verbrauch durch einen Amperstundenzähler überwacht wird, wobei die Messeinrichtung eine Duplexverbindungs-Schnittstelle mit einem Femsteuerungselement hat.

5. Fluidmesseinrichtung nach Anspruch 4, **dadurch gekennzeichnet, dass** die Messeinrichtung (30) in der Lage ist, Mikrolecks zu erfassen, wobei dazu die Umdrehungsdauer der Turbine kontinuierlich gemessen und mit dem Durchflusspegel verglichen wird, der in dem nichtflüchtigen Speicher programmiert ist, und zwar so, dass, wenn sie länger ist als eine vorgegebene Zeitdauer, eine Anzeige an dem Mess- bzw. Anzeigeinstrument (33) der Messeinrichtung aktiviert wird, die das Vorhandensein von Lecks anzeigt, wobei es möglich ist, diese Informationen zu dem Fernsteuerungselement zu übertragen.

6. Fluidmesseinrichtung nach Anspruch 4, **dadurch gekennzeichnet, dass** die Messeinrichtung (30) in der Lage ist, die letzte Kennziffer bzw. Anzeige des Verbrauchs, die erzeugt wurde, zu sichern, wobei sie zu diesem Zweck einen nichtflüchtigen Speicher enthält, in den die Kennziffer immer dann geschrieben wird, wenn sie sich nennenswert ändert.

7. Fluidmesseinrichtung nach Anspruch 4, **dadurch gekennzeichnet, dass** die Messeinrichtung (30) in der Lage ist, nur Warmwasser zu zählen, wobei sie aus diesem Grund einen Temperatursensor oder Thermistor enthält, der extern mit dem Rohr verbunden ist, in dem das Wasser fließt, und zwar so, dass die Messeinrichtung nur danndie Temperatur des Thermistors misst, wenn diese den vorgegebenen Temperaturschwellenwert übersteigt, und Wasser akkumuliert.

8. Fluidmesseinrichtung nach Anspruch 4, **dadurch gekennzeichnet, dass** die Durchflusskurve, die aus dem Verhältnis der Umdrehung pro Durchflusseinheit (D) der Turbine resultiert, linearisiert wird, um sie an jede Messeinrichtung anzupassen, wobei zu diesem Zweck zuvor eine Standardkurve der Turbinen für das gesamte Durchfluss-Spektrum vorhanden ist.

9. Fluidmesseinrichung nach Anspruch 4, **dadurch gekennzeichnet, dass** die Messeinrichtung (30) einen Bildschirm bzw. eine Anzeigeeinrichtung (33) mit einer Anzeige (40) eines internen Fehlers aufweist, wobei zu diesem Zweck das System über redundante Informationen aus den in dem nichtflüchtige Speicher und einem Teil des RAM gespeicherten Informationen verfügt und diese unter Verwendung von CRC-Codes so aktualisiert, dass, wenn der nichtflüchtige Speicher modifiziert wird, der CRC ebenfalls modifiziert wird und die Korrektur des CRC periodisch geprüft wird, und, wenn sie nicht richtig ist, die aufeinanderfolgenden CRC anderer Vorrichtungen geprüft werden, und wenn sie nicht richtig sind, die Anzeige (40) des internen Fehlers aktiviert wird.

10. Fluidmesseinrichtung nach Anspruch 4, **dadurch gekennzeichnet, dass** die Messeinrichtung (30) von einer Batterie gespeist wird und zum ordnungsgemäßen Betrieb der Messeinrichtung ihre Ladung mittels eines Amperstundenzählers überwacht wird, wobei die Information auf dem Bildschirm (33) erscheint und die Form einer Batterie mit mehreren Segmenten (42) hat, die die verfügbare Ladung anzeigen.

11. Fluidmesseinrichtung nach Anspruch 4, **dadurch gekennzeichnet, dass** die Messeinrichtung (30) eine Duplexverbindungsschnittstelle mit dem Fernsteuerungselement aufweist, wobei die Informationen von der Messeinrichtung (30) auf der SDATA-Leitung gesendet und von der Messeinrichtung über die SEL-Leitung empfangen werden, und zwar so, dass der Mikroprozessor die von dem Femsteuerungselement empfangenen Anweisungen decodiert und die Anweisung ausführt, mit der er betraut wird.

12. Fluidmesseinrichtung nach Anspruch 4, **dadurch gekennzeichnet, dass** die Übertragung aller Informationen der Messeinrichtung digital abläuft.

13. Fluidmesseinrichtung nach Anspruch 4, **dadurch gekennzeichnet, dass** die Messeinrichtung selbst, ohne dass äußere Einrichtungen erforderlich sind, Informationen speichert, bei denen es sich um ihre eigenen Informationen und um berechnete Informationen handeln kann.

## Revendications

1. Appareil de mesure de fluide, comprenant une partie de mesure (2) destinée à être déplacée par le fluide et un système électronique de correction (6) qui comporte une base de données (8), dans lequel le système électronique de correction (6) est destiné à mesurer périodiquement la fréquence de déplacement de la partie de mesure,
**caractérisé en ce que**
la base de données (8) comporte des informations relatives à des fréquences de déplacement de la partie de mesure (2) avec des nombres correspondants de déplacements qui correspondent à une certaine unité de volume du fluide,
le système électronique de correction (6) est destiné à déterminer, d'après la fréquence mesurée de déplacement de la partie de mesure (2) et à l'aide de la base de données (8), le nombre de déplacements de la partie de mesure qui correspond à l'unité de volume, et
le système électronique de correction est en outre destiné à compter le nombre de déplacements effectués par la partie de mesure et à émettre une impulsion chaque fois qu'il cumule un nombre de déplacements qui correspond au nombre de déplacements qui a été déterminé comme correspondant à l'unité de volume.

2. Appareil de mesure de fluide selon la revendication 1, **caractérisé en ce que** le système électronique de correction (6) comporte un tachymètre ou appareil de mesure de fréquence (7) et un diviseur programmable (9) disposé de manière que l'appareil de mesure de fréquence (7) mesure le nombre de fois où le signal produit par la partie de mesure et capturé par le capteur pendant une période change, alors que le calcul du nombre de cycles de la partie de mesure par unité de volume est réalisé par consultation de la base de données (8), le diviseur programmable (9) comprenant un ou plusieurs compteurs binaires (16) qui peuvent être présélectionnés, avec la particularité que les impulsions résultantes de volume peuvent être transmises à une unité distante d'accumulation ou peuvent être cumulées par le système électronique de correction lui-même.

3. Appareil de mesure de fluide selon la revendication 1, **caractérisé en ce que** le système électronique de correction s'applique à tous les types d'appareils de mesure qui possèdent ou peuvent posséder un type de transmission magnétique ou autre du signal de moment de la partie de mesure.

4. Appareil de mesure de fluide selon l'une quelconque des revendications précédentes, **caractérisé en ce que** l'appareil de mesure (30) a une surface inclinée (32) sur laquelle est placé un écran, un dispositif d'affichage ou un dispositif d'affichage à cristaux liquides LCD (33) sur lequel apparaît l'information et de manière analogue, sur l'une de ses surfaces, il possède une paire de connecteurs internes (34) qui peuvent être scellés par des couvercles respectifs à visser et par lesquels plusieurs organes de mesure (30) d'une installation peuvent rester reliés par des câbles respectifs (35), il est possible d'obtenir la lecture par un connecteur extérieur (37) connecté à un appareil de mesure par le câble correspondant (36) ou directement à partir d'un appareil de mesure, et la disposition est telle que cet appareil de mesure lui-même effectue différentes fonctions et mémorise des données et comporte à cet effet un microprocesseur, une mémoire permanente telle qu'une mémoire EEPROM, un capteur de température ou une thermistance au contact de la partie extérieure du tube dans lequel circule l'eau, ainsi qu'une batterie dont la consommation est contrôlée par un compteur d'ampères-heure, avec la particularité que l'appareil de mesure a une interface de communication en duplex avec un élément distant de commande.

5. Appareil de mesure de fluide selon la revendication 4, **caractérisé en ce que** l'appareil de mesure (30) peut détecter des microfuites pour lesquelles la période de révolution de la turbine est mesurée de façon continue et comparée au niveau du débit programmé dans la mémoire permanente, d'une manière telle que, si elle n'est pas supérieure à une période prédéterminée, une indication (38) est donnée sur une jauge ou un indicateur (33) de l'appareil de mesure indiquant l'existence de fuites, l'information pouvant être transmise à l'élément distant de commande.

6. Appareil de mesure de fluide selon la revendication 4, **caractérisé en ce que** l'appareil de mesure (30) est capable de conserver le dernier indice ou la dernière indication de consommation produit et comporte à cet effet une mémoire permanente dans laquelle est écrit l'indice chaque fois qu'il change notablement.

7. Appareil de mesure de fluide selon la revendication 4, **caractérisé en ce que** l'appareil de mesure (30) peut compter uniquement l'eau chaude et, pour cette raison, il comprend un capteur de température ou une thermistance couplé à l'extérieur à la conduite dans laquelle circule l'eau, d'une manière telle que l'appareil de mesure mesure la température de la thermistance et cumule l'eau uniquement lorsque la température dépasse un seuil préétabli de température.

8. Appareil de mesure de fluide selon la revendication 4, **caractérisé en ce que** la courbe de débit résultant du rapport de rotation par unité de débit (D) de la turbine est linéarisée par adaptation automatique à chaque appareil de mesure et, à cet effet, une courbe de référence des turbines est incorporée préalablement pour toute la plage des débits.

9. Appareil de mesure de fluide selon la revendication 4, **caractérisé en ce que** l'appareil de mesure (30) comporte un écran ou dispositif d'affichage (33) ayant une indication (40) d'un défaut interne et, à cet effet, le système a des informations redondantes de remise à jour provenant d'informations conservées dans la mémoire permanente et en partie dans la mémoire à accès direct à l'aide de codes CRC afin que, lorsque la mémoire permanente est modifiée, les codes CRC soient aussi modifiés et, périodiquement, la correction des codes CRC est vérifiée et, si les codes ne sont pas convenables, les codes CRC successifs des autres dispositifs sont vérifiés et, dans le cas où ils ne sont pas convenables, l'indication (40) d'un défaut interne est activée.

10. Appareil de mesure de fluide selon la revendication 4, **caractérisé en ce que** l'appareil de mesure (30) est alimenté par une batterie d'accumulateurs et, pour que l'appareil de mesure ait un bon fonctionnement, sa charge est contrôlée par un appareil de mesure d'ampères-heure, et donne des informations sur l'écran (33) qui représentent un dessin de batterie avec plusieurs segments (42) indiquant la charge disponible.

11. Appareil de mesure de fluide selon la revendication 4, **caractérisé en ce que** l'appareil de mesure (30) a une interface de communication en duplex avec l'élément distant de commande, les informations étant transmises par l'appareil de mesure (30) le long de la ligne SDATA et reçues par l'appareil de mesure par la ligne SEL, d'une manière telle que le microprocesseur décode les ordres reçus de l'élément distant de commande et exécute les ordres qui lui sont demandés.

12. Appareil de mesure de fluide perfectionné selon la revendication 4, **caractérisé en ce que** la transmission de toutes les informations de l'appareil de mesure est numérique.

13. Appareil de mesure de fluide selon la revendication 4, **caractérisé en ce que** l'appareil de mesure est destiné à mémoriser lui-même, sans aucun appareil extérieur nécessaire, des informations qui peuvent être ses propres informations ainsi que des informations calculées.
